(19) Europäisches Patentamt / European Patent Office / Office européen des brevets

(11) **EP 2 463 436 A1**

(12) **EUROPEAN PATENT APPLICATION**
published in accordance with Art. 153(4) EPC

(43) Date of publication:
**13.06.2012 Bulletin 2012/24**

(51) Int Cl.:
*D06F 39/08* (2006.01)       *B01J 39/10* (2006.01)
*B01J 49/00* (2006.01)       *C02F 1/42* (2006.01)
*C02F 1/46* (2006.01)       *D06F 39/02* (2006.01)

(21) Application number: **10806197.9**

(22) Date of filing: **23.07.2010**

(86) International application number:
**PCT/JP2010/004710**

(87) International publication number:
**WO 2011/016197 (10.02.2011 Gazette 2011/06)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **06.08.2009 JP 2009183012**

(71) Applicant: **Panasonic Corporation**
**Kadoma-shi**
**Osaka 571-8501 (JP)**

(72) Inventors:
• **NAMBU, Kei**
**Osaka-shi, Osaka 540-6207 (JP)**
• **YASUI, Keiko**
**Osaka-shi, Osaka 540-6207 (JP)**
• **ZAIZEN, Katsunori**
**Osaka-shi, Osaka 540-6207 (JP)**

(74) Representative: **Schwabe - Sandmair - Marx**
**Patentanwälte**
**Stuntzstraße 16**
**81677 München (DE)**

(54) **WASHING MACHINE**

(57)     A washing machine includes a washing tub, a water tub, a drive unit, a feed-water unit, a drain unit, a water softening unit, a pH increasing unit, a pH decreasing unit, and a control unit. The water softening unit is disposed between the feed-water unit and the water tub, and is filled with a weak acid cation exchange material having weak acidic cation exchange groups with a pH from 7.5 to 14 at point of zero charge. The pH increasing unit increases the pH of washing water, and the pH decreasing unit decreases the pH of the washing water. The control unit performs the following operations: controlling the pH increasing unit to increase the pH of the washing water while the washing water is being fed; introducing the washing water with the increased pH to the water softening unit to decrease the hardness of the washing water; introducing the washing water with the decreased hardness to the washing tub; controlling, after the washing water is fed, the pH decreasing unit to decrease the pH of the washing water to a value of 5.5 to 7.0; and introducing the washing water with the decreased pH to the water softening unit.

FIG. 1

**Description**

**TECHNICAL FIELD**

The present invention relates to a washing machine equipped with a water softening device.

**BACKGROUND ART**

Washing machines generally use tap water, groundwater, or well water, and are greatly affected by the qualities of water used. In particular, hard water components such as calcium and magnesium deteriorate the detergency of surfactants, thereby adversely affecting the washing performance. Hard water does not dissolve detergent as readily as soft water, possibly causing any unit of a washing machine to be coated with detergent residue and turning moldy. Hard water also contains trace amounts of polyvalent metal ions, e.g., of iron, manganese, and aluminum, which can interact with detergent, thereby deteriorating the detergency of surfactants.

To address this problem, commercially available detergents contain a water softening agent such as zeolite, which absorbs hard water components. Zeolite easily absorbs polyvalent ions, thereby providing some effect of water softening. Zeolite, however, is used in a detergent dissolved in washing water, causing some of the hard water components and metal ions to be again dissolved in the washing water. As a result, the above-described problem remains unsolved.

For this reason, users in hard water areas use a larger amount of detergent than users in soft water areas to ensure the washing performance. Detergent packages sold in hard water areas often indicate an appropriate amount of detergent to be loaded according to the hardness of water. There is a concern, however, that using a large amount of detergent is not eco-friendly. Moreover, there is no radical solution to the detergent residue in the washing machine.

To overcome this problem, it has been suggested to remove hard water components by mounting a water softening device such as cation exchange resin in washing machines (see, for example, Patent Literatures 1 and 2). The most common cation exchange resin contains, in its surface, acidic ion exchange groups such as sulfonic acid groups and absorbs cations by way of electrostatic forces. Acidic ion exchange groups absorb cations at different degrees depending on the ionic radius and valence of the cations. Sulfonic acid groups, which are strong acidic ion exchange groups, absorb trivalent ions most easily, followed by divalent ions, and then monovalent ions. When the ionic valence is the same, sulfonic acid groups tend to absorb ions with larger ionic radius. When hard water passes through $Na^+$ ion exchange resin, $Ca^{2+}$ and $Mg^{2+}$ ions which are hard water components, are retained by the cation exchange resin because of their higher selectivity than $Na^+$ ions. Instead, the same amount of $Na^+$ ions is drawn out.

The cation exchange resin loses its ability to soften water when most surface charges of the acidic ion exchange groups are saturated with hard water components. Therefore, it is necessary to regenerate the cation exchange resin by adding a regenerant such as salt (NaCl) to the resin at regular intervals and by passing water that contains highly concentrated $Na^+$ ions through the resin, thereby exchanging $Ca^{2+}$ and $Mg^{2+}$ ions with the $Na^+$ ions.

It has also been suggested to provide a water softening device including either weak acid cation exchange resin or chelating resin instead of a strong acid cation exchange resin (see, for example, Patent Literature 3). These ion exchange resins contain carboxyl groups as the ion exchange groups. Unlike the above-mentioned sulfonic acid groups, carboxyl groups, which are weak acidic ion exchange groups, have high selectivity for $H^+$ ions (acid) as shown in Mathematical Formula 1:

$$H^+ \gg Ca^{2+} > Mg^{2+} > K^+ > Na^+ \qquad \text{Mathematical Formula 1.}$$

Carboxyl groups have a pKa of 5 to 6. When the pH of water to be processed is higher by at least 0.5 than the pKa of the carboxyl groups, most of the carboxyl groups are generally dissociated and generate negative charges, thereby absorbing $Ca^{2+}$ and $Mg^{2+}$ ions. When, on the other hand, the pH of water to be processed is lower by at least 0.5 than the pKa of the carboxyl groups, $H^+$ ions absorb the carboxyl groups. As a result, most of the carboxyl groups are undissociated, and do not absorb $Ca^{2+}$ or $Mg^{2+}$ ions. This specific selectivity of carboxyl groups for $H^+$ ions can be used to control the pH of water to be processed. Carboxyl groups can soften water when the water is alkaline, and regenerate the resin when the water is acidic.

Generating acid or alkaline water using an electrolytic bath with a diaphragm eliminates the need to add a regenerant for weak acid ion exchange resin. This provides, in principle, a self-regenerating water softening device.

$Na^+$ ions have lower selectivity for cation exchange resin than $Ca^{2+}$ and $Mg^{2+}$ ions. It is therefore necessary to add to the cation exchange resin, as a regenerant, at least a thousand times the amount of $Na^+$ ions than $Ca^{2+}$ and $Mg^{2+}$ ions that are released for exchanging. This requires the user to take the trouble to frequently supply a regenerant such as salt to the cation exchange resin, against their desire to reduce the usage of detergent.

In addition, highly concentrated salt water may touch the skin of the user for any reason, and cause the user to get shocked. When metal is used inside the washing machine or in its peripheral equipment such as the drain pipe, they may be corroded by highly concentrated salt water.

Existing weak acid cation exchange resin and chelating resin contain, as cation exchange groups, carboxyl groups with a pKa of 5 to 6. To regenerate these resins, it is necessary to generate acid water with a pH of 4.5 to 5.5. To generate an acid with a low pH without using a regenerant, it is necessary to mount a device for electrolyzing water and a DC power supply on the washing machine. It is, however, not practical to mount an electrolytic device in domestic washing machines due to installation space limitations.

Tap water, which generally contains at least several ppm of chloride ions, generates oxidative hypochlorous acid during electrolysis. Cation exchange resin, which is generally made of an organic polymer material, is subjected to oxidative degradation for a long time by hypochlorous acid. Since it cannot be expected that users periodically replace components of domestic washing machines, electrolysis may shorten the useful life of the resin and the water softening device.

Citation List

Patent Literatures

Patent Literature 1: Japanese Patent Unexamined Publication No. H11-319383
Patent Literature 2: Japanese Patent Unexamined Publication No. H11-70296
Patent Literature 3: Japanese Patent Unexamined Publication No.2005-161144

## SUMMARY OF THE INVENTION

The present invention is directed to a washing machine including the following components: a washing tub, a water tub, a drive unit, a feed-water unit, a drain unit, a water softening unit, a pH increasing unit, a pH decreasing unit, and a control unit. The washing tub is rotatable and accommodates laundry. The water tub includes the washing tub. The drive unit is attached to the water tub, and rotates the water tub. The feed-water unit feeds washing water into the water tub and the washing tub. The drain unit drains the washing water from the water tub and the washing tub. The water softening unit is disposed between the feed-water unit and the water tub, and is filled with a weak acid cation exchange material having weak acidic cation exchange groups with a pH from 7.5 to 14 at point of zero charge. The pH increasing unit increases the pH of the washing water. The pH decreasing unit decreases the pH of the washing water. The control unit controls the feed-water unit, the drive unit, and the drain unit so as to control washing, rinsing and spin-drying steps successively. The control unit performs the following operations: controlling the pH increasing unit to increase the pH of the washing water while the washing water is being fed; introducing the washing water with the increased pH to the water softening unit to decrease the hardness of the washing water; introducing the washing water with the decreased hardness to the washing tub; controlling, after the washing water is fed, the pH decreasing unit to decrease the pH of the washing water to a value of 5.5 to 7.0; and introducing the washing water with the decreased pH to the water softening unit.

A weak acid cation exchange material with a point of zero charge of 7.5 or more has high selectivity for H$^+$ ions (acid), and is less likely to absorb cations other than H$^+$ ions. As a result, the weak acid cation exchange material is readily regenerated to the H$^+$ form. A general weak acid cation exchange resin containing carboxyl groups (COOH groups) as cation exchange groups has a point of zero charge of 5 to 6. The weak acid cation exchange material used in the washing machine of the present invention can be regenerated to the H form with water at a higher pH (about pH 7) than those ion exchange resins. A weak acid with a pH of 7 or so can be generated by various means without using a chemical agent or an electrolytic device. Thus, the washing machine is equipped with the water softening device that does not require using a special regenerant or performing electrolysis.

## BRIEF DESCRIPTION OF DRAWINGS

Fig. 1 is a configuration diagram of a washing machine according to a first exemplary embodiment of the present invention.
Fig. 2A shows tap water being fed before a washing step in the washing machine according to the first exemplary embodiment.

Fig. 2B shows tap water being fed before a rinsing step in the washing machine according to the first exemplary embodiment.

Fig. 3A shows tap water being fed before a washing step in a washing machine according to a second exemplary embodiment of the present invention.

Fig. 3B shows tap water being fed before a rinsing step in the washing machine according to the second exemplary embodiment.

Fig. 4 is a configuration diagram of a washing machine according to a third exemplary embodiment of the present invention.

## DESCRIPTION OF EMBODIMENTS

Exemplary embodiments of the present invention will be described as follows with reference to drawings. Note that the present invention is not limited to these exemplary embodiments.

## FIRST EXEMPLARY EMBODIMENT

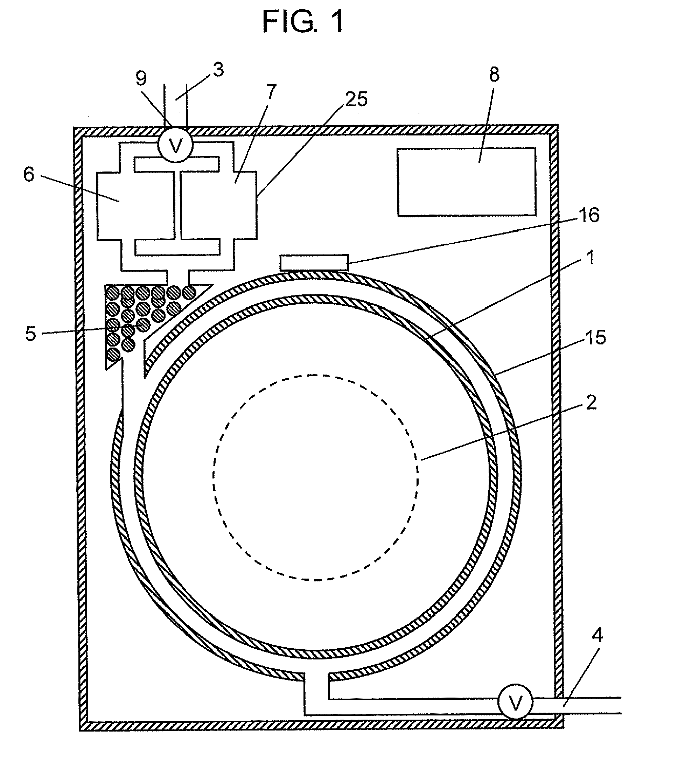

Fig. 1 is a configuration diagram of a washing machine according to a first exemplary embodiment of the present invention. The washing machine shown in Fig. 1 includes washing tub 1, water tub 15, drive unit 16, washing unit 2, feed-water unit 3, drain unit 4, water softening unit 5, detergent container (pH increasing unit) 6, pH decreasing unit 7, and control unit 8.

Washing tub 1 is rotatable and accommodates laundry. Washing unit 2 includes a motor, which stirs washing tub 1 and provides physical washing effect. Feed-water unit 3 feeds washing water into water tub 15 and washing tub 1. Drain unit 4 drains washing water from water tub 15 and washing tub 1. Water softening unit 5 is disposed between feed-water unit 3 and water tub 15 so as to soften the washing water fed by feed-water unit 3. Water softening unit 5 is filled with a weak acid cation exchange material having weak acidic cation exchange groups with a pH from 7.5 to 14 at point of zero charge. Detergent container (pH increasing unit) 6 is disposed between feed-water unit 3 and water softening unit 5, and accommodates detergent. PH increasing unit 6 increases the pH of washing water. PH decreasing unit 7, which decreases the pH of washing water, is disposed between feed-water unit 3 and water softening unit 5. PH increasing unit 6 and pH decreasing unit 7 are in different paths from each other. Control unit 8 controls feed-water unit 3, drive unit 16, drain unit 4, and other components so as to control washing, rinsing and spin-drying steps successively. Water tub 15 includes washing tub 1. Drive unit 16 is attached to water tub 15 and rotates water tub 15.

The weak acid cation exchange material filled in water softening unit 5 is made of hydroxide such as aluminum or iron. The weak acid cation exchange material can alternatively be a metallic material such as manganese oxide or titanium oxide, or a weak acid mineral such as allophane or imogolite. It can further alternatively be a material produced by coating these materials onto another porous material and then sintering it.

The weak acid cation exchange material may alternatively be produced by coating an inorganic material having hydroxyl groups on its surface onto the surface of a base, so that the hydroxyl groups act as weak acidic cation exchange groups.

In this case, amorphous metal hydroxide is particularly weakly acidic, possibly having a point of zero charge at pH 7.5 or more. This material generates negative charges on its surface in an aqueous solution with a pH of 7.5 or more, and acts as a weak acid cation exchange material. This material also generates positive charges on its surface in an aqueous solution with a pH of 7.5 or less, and acts as an anion exchange resin.

The above-mentioned material is more stable against oxidation and hydrolysis than common weak acid cation exchange resins which have a point of zero charge at about pH 8.0 to 9.0, and which are made of an organic polymer material (such as acrylic, styrene, or divinylbenzene). Many countries have guidelines for tap water: the water should contain hypochlorous acid having oxidizing properties with the purpose of sterilization. For this reason, generally-used cation exchange resins can be subjected to oxidative degradation for a long time. Since it cannot be expected that users periodically replace components of domestic washing machines, it is necessary to use an ion exchange material that lasts as long as the washing machines themselves do. In that respect, the weak acid cation exchange material used in the washing machine of the present first exemplary embodiment is a suitable water softening material for domestic washing machines.

For example, in amorphous alumina (amorphous aluminum oxide), hydroxyl groups are dissociated and perform cation exchange as shown in Mathematical Formula 2:

$$\text{Al} - \text{OH} \rightarrow \text{Al} - \text{O}^- + \text{H}^+ \qquad \text{Mathematical Formula 2.}$$

Aluminum oxide has a point of zero charge at about pH 8 to 9. In pH levels above this range, the reaction proceeds to the right-hand side. In other words, most of the aluminum oxide is dissociated and performs cation exchange. In contrast, when, the pH is in an acid region, the aluminum oxide is undissociated, that is, becomes the -OH form. By making the pH of the aluminum oxide lower by at least 0.5 than the point of zero charge according to this principle, the above-described weak acid cation exchange material can be regenerated. The weak acid cation exchange material differs from the conventional weak acid cation exchange resin, which can be regenerated only with very strong acid water because it contains, as exchange groups, carboxyl groups with a point of zero charge of 5 to 6.

The above-described materials can be produced by subjecting minerals to a comparatively easy process. As a result, they can be produced at lower cost than the conventional cation exchange resin made of synthetic resin. These inorganic materials are more stable against high temperatures and oxidation degradation by an oxidizing agent than the conventional weak acid cation exchange resin.

PH increasing unit 6 is detergent container 6 into which detergent is poured. Common laundry detergents contain several to 40% of an alkaline chemical such as sodium carbonate or sodium hydrogen carbonate. Therefore, when the detergent is dissolved in the fed washing water, pH increasing unit 6 can make the pH of the washing water higher than the point of zero charge of the weak acid cation exchange material, allowing the weak acid cation exchange material to generate negative charges.

PH decreasing unit 7 of the present first exemplary embodiment is fabric softener feed unit 7 into which fabric softener to be added to tap water is poured. Fabric softener feed unit 7 includes fabric softener container 25 into which fabric softener is poured, and feed-water switching valve 9. Valve 9 switches between the channels of feed-water unit 3 such that water is fed into fabric softener container 25 in a rinsing step. The water fed into fabric softener container 25 in the rinsing step is made to flow into water softening unit 5. Common fabric softeners have a neutral pH, and contain a pH adjusting agent, keeping the pH of the washing water lower than the point of zero charge of the weak acid cation exchange material. Fabric softeners also have the effect of converting the weak acid cation exchange material to the H form.

It is common, in hard water areas, to use fabric softeners to prevent washed clothes from becoming stiff. Common fabric softeners contain a pH adjusting agent or acid to neutralize the alkaline chemical contained in detergent, and therefore has a pH lower than the neutral. In general, adding fabric softener adjusts the pH value of the washing water to 7.5 to 6, which is lower than the point of zero charge of the weak acid cation exchange material. The liquid with such a pH value is made to flow into water softening unit 5, thereby regenerating the weak acid cation exchange material used in the present first exemplary embodiment.

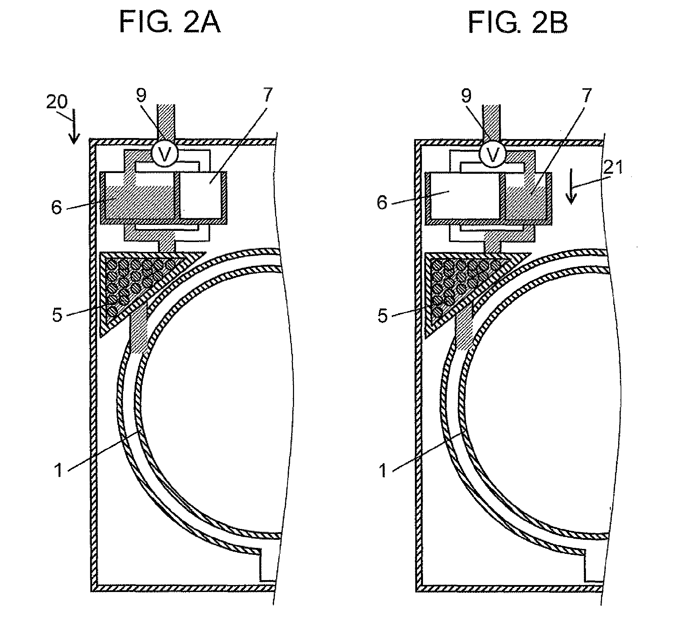

Water softening unit 5, detergent container 6, and pH decreasing unit 7 which are characteristic of the first exemplary embodiment will be described as follows with reference to the operations shown in Figs. 2A and 2B. Figs. 2A and 2B show tap water being fed before a washing step and before a rinsing step, respectively, in the washing machine according to the first exemplary embodiment.

Before a washing step, as shown in Fig. 2A, tap water is made to flow in the direction (arrow 20) to detergent container (pH increasing unit) 6 by feed-water switching valve 9. In this case, washing water whose pH is increased to 10 or more by the alkaline chemical contained in the detergent dissolved in the washing water flows into water softening unit 5. The weak acid cation exchange material filled into water softening unit 5 is dissociated under the alkaline conditions, and performs cation exchange. As a result, hard water components such as calcium and magnesium ions contained in the tap water are absorbed to the surface of the weak acid cation exchange material by way of electrostatic forces. Assume that 300 ppm of hard water is fed at a flow rate of 5 liters per min. to water softening unit 5 containing 500 ml of weak acid cation exchange material. In this case, the hardness of the water decreases to about 100 ppm. The washing water softened in that manner is fed into washing tub 1. The softened water can dissolve detergent more easily than hard water, making the detergent more powerful.

Before a rinsing step, on the other hand, as shown in Fig. 2B, tap water is made to flow in the direction (arrow 21) to pH decreasing unit 7 by feed-water switching valve 9. PH decreasing unit 7 is a fabric softener supplying means. In this case, washing water whose pH is decreased to 7 or less by the pH adjusting agent contained in the fabric softener dissolved in the washing water flows into water softening unit 5. The weak acid cation exchange material filled into water softening unit 5 is undissociated under these pH conditions, and is regenerated. The hard water components eliminated from water softening unit 5 are sent to washing tub 1 and drained with water after a rinsing step.

Thus, control unit 8 performs the following operations: controlling pH increasing unit 6 to increase the pH of washing water while the washing water is being fed; introducing the washing water with the increased pH to water softening unit 5 to decrease the hardness of the washing water; introducing the washing water with the decreased hardness to washing tub 1; controlling, after the washing water is fed, pH decreasing unit 7 to decrease the pH of the washing water to a value of 5.5 to 7.0; and introducing the washing water with the decreased pH to water softening unit 5.

Thus, water softening unit 5 is regenerated in the ordinary use of the washing machine. This achieves stable supply of soft water, thereby providing stable washing performance.

There is, however, a fear that metal ions contained in tap water such as iron and manganese are chelate-bonded to the weak acid ion exchange material during long-term use, causing the material not to be regenerated. To remove these metal ions, it is necessary to add a chelating agent with a higher chelating ability than the weak acid ion exchange material about once a year. More specifically, at least ten times the amount of citric acid, malic acid, or succinic acid than the weak acid ion exchange material is poured in detergent container 6 and then the washing machine is operated once or twice.

Thus, the regeneration of water softening unit 5 is secured by providing water softening unit 5 with a chelating agent or an acid stronger than the acid generated by pH decreasing unit 7 for maintenance every after a predetermined time of use.

## SECOND EXEMPLARY EMBODIMENT

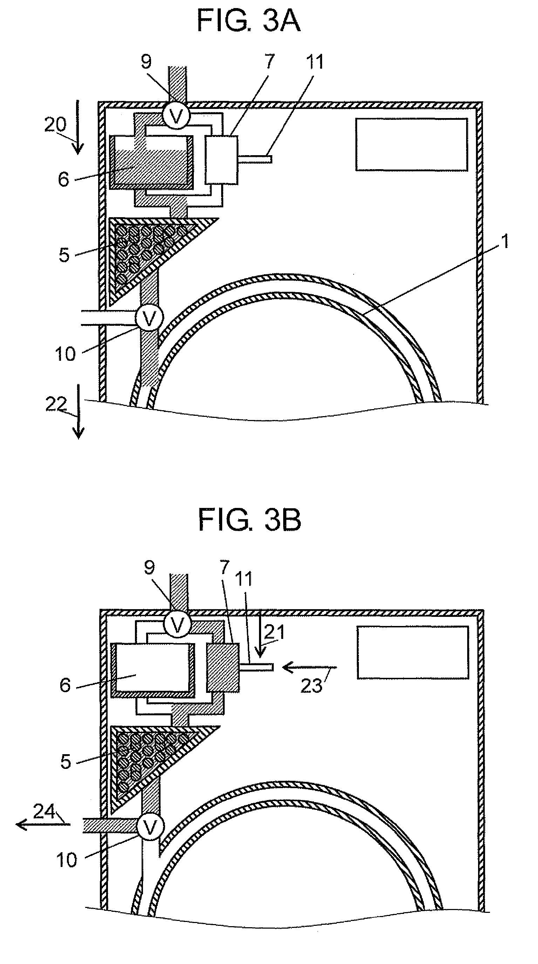

In a second exemplary embodiment, components identical to those in the first exemplary embodiment are denoted by the same reference numerals, and these components will not be described again in detail. The following description will be directed to their differences. Figs. 3A and 3B show tap water being fed before a washing step and before a rinsing step, respectively, in a washing machine according to the second exemplary embodiment.

The washing machine of the second exemplary embodiment includes channel switching valve 10 between water softening unit 5 and washing tub 1. Valve 10 switches between the two channels: one guides water to washing tub 1, and the other drains the water.

As shown in Fig. 3A, water softening unit 5 performs water softening under alkaline conditions in the same manner as in the first exemplary embodiment. In this case, channel switching valve 10 allows softened washing water to flow in the direction of arrow 22 so as to be fed to washing tub 1.

As shown in Fig. 3B, before a rinsing step, feed-water switching valve 9 allows tap water to flow in the direction of pH decreasing unit 7 (arrow 21). PH decreasing unit 7 in the present second exemplary embodiment is a gas dissolving unit for dissolving carbon dioxide in the air into the tap water. The gas dissolving unit dissolves air taken through air supply unit 11 in the direction of arrow 23 in tap water (washing water). One example of the gas dissolving unit is an ejector. An ejector draws in the air using the negative pressure created by water flow, generates micro bubbles in the water, and dissolves them in the water in a short time.

Air contains about 360 ppm of carbon dioxide. When in equilibrium with tap water, carbon dioxide dissolved in the tap water produces carbonic acid (Mathematical Formula 3). Some of the carbonic acid dissociates (Mathematical Formula 4), making the tap water weakly acidic. Thus, the gas dissolving unit is used to generate mild carbonated water with weak acidity, which is introduced to water softening unit 5.

$$CO_2 + H_2O \rightarrow H_2CO_3 \qquad \text{Mathematical Formula 3}$$

$$H_2CO_3 \rightarrow H^+ + HCO_3 \qquad \text{Mathematical Formula 4}$$

It is known that when pure water and carbon dioxide in the air are in equilibrium, the equilibrium pH is about 5.6. The weak acid cation exchange material can be regenerated by using carbonated water when ordinary tap water, instead of pure water, is used together with weak acidic cation exchange groups with a point of zero charge of about 7.5 or more. The reason for this is as follows. The equilibrium pH obtained when pure water and carbon dioxide in the air are in equilibrium is lower than the point of zero charge of the weak acid cation exchange material. This provides the effect of converting the weak acid cation exchange material to the H form.

The regenerated water softening unit draws out hard water components such as $Ca^{2+}$ and $Mg^{2+}$ ions absorbed therein. If these hard water components are flown into the detergent-containing washing water, this will cause detergent residue or make cloth fabrics stiff in rinse water. To avoid these problems, it is desirable to prevent detergent, clothes, and washing tub 1 from coming into contact with each other. For this purpose, channel switching valve 10 allows the water flown from the regenerated water softening unit to be drained through another channel (arrow 24), instead of passing through washing tub 1. This structure is advantageous to preventing fabric stiffness, but is disadvantageous to saving water because the washing water used to regenerate the water softening unit is drained without being used.

## THIRD EXEMPLARY EMBODIMENT

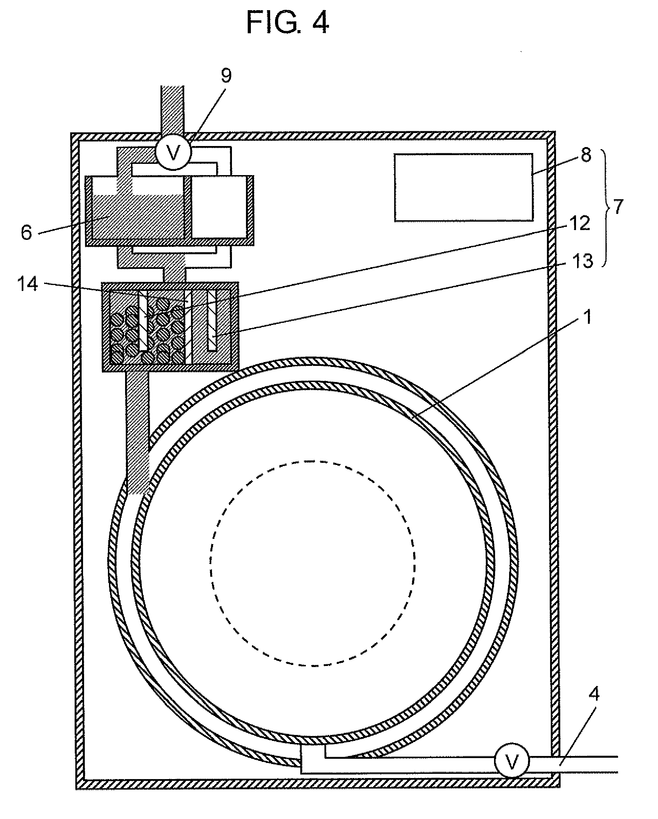

In a third exemplary embodiment, components identical to those in the first exemplary embodiment are denoted by the same reference numerals, and these components will not be described again in detail. The following description will be directed to their differences. Fig. 4 is a configuration diagram of a washing machine according to the third exemplary embodiment.

PH decreasing unit 7 used in the present third exemplary embodiment includes a pair of electrolysis electrodes and control unit 8 having a voltage application function. The electrolysis electrodes consist of anode 12 disposed surrounded by the weak acid cation exchange material, and cathode 13 disposed adjacent to anode 12 with isolation film 14 therebetween.

These electrolysis electrodes are applied with no voltage when washing water is fed. The weak acid cation exchange material generates negative charges on its surface due to the effect of alkaline detergent, and performs water softening function.

When, on the other hand, the electrolysis electrodes are applied with a DC voltage while water is being fed before a rinsing step, the hard water around anode 12 produces acid according to the reaction shown in Mathematical Formula 5:

$$H_2O \rightarrow 2H^+ + 1/2O_2 + 2e^- \qquad \text{Mathematical Formula 5}$$

The produced acid makes the washing water around the weak acid cation exchange material lower than the point of zero charge. As a result, the weak acid cation exchange material is converted back to the H form.

Thus, pH decreasing unit 7 in the present third exemplary embodiment includes a pair of electrodes including anode 12 disposed adjacent to the weak acid cation exchange material, and control unit 8 having a DC voltage application function. PH decreasing unit 7 decreases the pH of the washing water around the weak acid cation exchange material by electrolysis of water.

When the conventional weak acid ion exchange resin is converted to the H form using electrolyzed acid water, the electrolysis produces hypochlorous acid as its by-product. The hypochlorous acid oxidatively degrades the ion exchange resin. In contrast, the weak acid cation exchange material used in the present invention, which is made, for example, of metal hydroxide, is much more stable against oxidation degradation. The weak acid cation exchange material is converted to the H form at pH 7 or less, thus saving energy required for electrolysis.

**INDUSTRIAL APPLICABILITY**

Thus, the water softening unit of the washing machine of the present invention can be applied not only to domestic washing machines, but also to washing machines, dishwashers, and other types of washing devices using alkaline detergent in industrial use. The water softening unit of the washing machine of the present invention is particularly useful when tap water or surface water is industrially used in hard water areas.

**REFERENCE MARKS IN THE DRAWINGS**

| | |
|---|---|
| 1 | washing tub |
| 2 | washing unit |
| 3 | feed-water unit |
| 4 | drain unit |
| 5 | water softening unit |
| 6 | pH increasing unit (detergent container) |
| 7 | pH decreasing unit (fabric softener feed unit) |
| 8 | control unit |
| 9 | feed-water switching valve |
| 10 | channel switching valve |
| 11 | air supply unit |
| 12 | anode |
| 13 | cathode |
| 14 | isolation film |
| 15 | water tub |
| 16 | drive unit |
| 20, 21, 22, 23, 24 | arrow |
| 25 | fabric softener container |

**Claims**

1.  A washing machine comprising
    a rotatable washing tub for accommodating laundry;
    a water tub including the washing tub;
    a drive unit attached to the water tub, the drive unit rotating the water tub;
    a feed-water unit for feeding washing water into the water tub and the washing tub;
    a drain unit for draining the washing water from the water tub and the washing tub;
    a water softening unit disposed between the feed-water unit and the water tub, the water softening unit being filled with a weak acid cation exchange material having weak acidic cation exchange groups with a pH from 7.5 to 14 at point of zero charge;
    a pH increasing unit for increasing a pH of the washing water; a pH decreasing unit for decreasing the pH of the washing water; and
    a control unit for controlling the feed-water unit, the drive unit, and the drain unit so as to control washing, rinsing and spin-drying steps successively, wherein
    the control unit performs the following operations:

    controlling the pH increasing unit to increase the pH of the washing water while the washing water is being fed,
    introducing the washing water with the increased pH to the water softening unit to decrease hardness of the washing water,
    introducing the washing water with the decreased hardness to the washing tub,
    controlling, after the washing water is fed, the pH decreasing unit to decrease the pH of the washing water to a value of 5.5 to 7.0, and
    introducing the washing water with the decreased pH to the water softening unit.

2.  The washing machine of claim 1, wherein
    the weak acid cation exchange material is an inorganic material having hydroxyl groups on a surface thereof, the hydroxyl groups acting as the weak acidic cation exchange groups.

3.  The washing machine of claim 1, wherein
    the weak acid cation exchange material includes a base and an inorganic material applied on a surface of the base, the inorganic material having hydroxyl groups on a surface thereof, the hydroxyl groups acting as the weak acidic cation exchange groups.

4.  The washing machine of claim 1, wherein
    the pH increasing unit is a detergent container into which detergent is poured.

5.  The washing machine of claim 1, wherein
    the pH decreasing unit includes:

    a fabric softener container into which fabric softener is poured; and
    a feed-water switching valve for switching between channels of the feed-water unit such that water is fed into the fabric softener container in a rinsing step, and

    the washing water fed into the fabric softener container in the rinsing step is made to flow into the water softening unit.

6.  The washing machine of claim 1, wherein
    the pH decreasing unit is a gas dissolving unit for dissolving carbon dioxide in the air into tap water, the gas dissolving unit generating mild carbonated water with weak acidity, and then introducing the mild carbonated water to the water softening unit.

7.  The washing machine of claim 1, wherein
    the pH decreasing unit includes a pair of electrodes including an anode disposed adjacent to the weak acid cation exchange material, and the control unit having a DC voltage application function, and
    the pH decreasing unit decreases a pH of water around the weak acid cation exchange material by electrolysis of water.

8.  The washing machine of claim 1, wherein

the water softening unit is provided with an acid stronger than an acid generated by the pH decreasing unit for maintenance every after a predetermined time of use.

9. The washing machine of claim 1, wherein
the water softening unit is provided with a chelating agent for maintenance every after a predetermined time of use.

# FIG. 1

FIG. 2A

FIG. 2B

# FIG. 3A

# FIG. 3B

# FIG. 4

| | INTERNATIONAL SEARCH REPORT | International application No. |
|---|---|---|
| | | PCT/JP2010/004710 |

**A.  CLASSIFICATION OF SUBJECT MATTER**
*D06F39/08*(2006.01)i, *B01J39/10*(2006.01)i, *B01J49/00*(2006.01)i, *C02F1/42* (2006.01)i, *C02F1/46*(2006.01)i, *D06F39/02*(2006.01)i

According to International Patent Classification (IPC) or to both national classification and IPC

**B.  FIELDS SEARCHED**

Minimum documentation searched (classification system followed by classification symbols)
D06F39/08, B01J39/10, B01J49/00, C02F1/42, C02F1/46, D06F39/02

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996–2010 |
| Kokai Jitsuyo Shinan Koho | 1971–2010 | Toroku Jitsuyo Shinan Koho | 1994–2010 |

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
|---|---|---|
| A | JP 2003-117554 A  (Sharp Corp.), 22 April 2003 (22.04.2003), entire text; all drawings (Family: none) | 1-9 |
| A | JP 2005-161144 A  (Matsushita Electric Industrial Co., Ltd.), 23 June 2005 (23.06.2005), entire text; all drawings (Family: none) | 1-9 |

☐  Further documents are listed in the continuation of Box C.　　☐  See patent family annex.

| | |
|---|---|
| *	Special categories of cited documents: | "T"	later document published after the international filing date or priority date and not in conflict with the application but cited to understand the principle or theory underlying the invention |
| "A"	document defining the general state of the art which is not considered to be of particular relevance | |
| "E"	earlier application or patent but published on or after the international filing date | "X"	document of particular relevance; the claimed invention cannot be considered novel or cannot be considered to involve an inventive step when the document is taken alone |
| "L"	document which may throw doubts on priority claim(s) or which is cited to establish the publication date of another citation or other special reason (as specified) | "Y"	document of particular relevance; the claimed invention cannot be considered to involve an inventive step when the document is combined with one or more other such documents, such combination being obvious to a person skilled in the art |
| "O"	document referring to an oral disclosure, use, exhibition or other means | |
| "P"	document published prior to the international filing date but later than the priority date claimed | "&"	document member of the same patent family |

| Date of the actual completion of the international search | Date of mailing of the international search report |
|---|---|
| 18 August, 2010 (18.08.10) | 31 August, 2010 (31.08.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

## REFERENCES CITED IN THE DESCRIPTION

**Patent documents cited in the description**

- JP H11319383 B
- JP H1170296 B
- JP 2005161144 A